# DEMANDE DE BREVET EUROPEEN

(11) **EP 0 552 082 A1**
(43) Date de publication de la demande: **21.07.1993**
(21) Numéro de dépôt: 93400045.6
(22) Date de dépôt: 11.01.1993
(51) Int. Cl.: H01R 4/70, H02G 15/18, H02G 15/115

(54) **Protection de terminaison de câble moyenne tension**

(30) Priorité: 15.01.1992 FR 9200354
(71) Demandeur: EUROMOLD, B-1060 Bruxelles (BE)
(72) Inventeur: Brackeniers, Christophe, B-2130 Brasschaat (BE); Cardinaels, Jozef, B-9080 Lochristi (BE)
(74) Mandataire: Buffiere, Michelle

(57) **Abrégé**

La protection de terminaison de câble recouvre le raccordement de chaque conducteur dudit câble à une borne fixe.

Elle est caractérisée en ce qu'elle est constituée par un manchon fixe (22) sur ladite borne (2) et un manchon mobile (21) sur ledit conducteur (1), et que ces manchons ont chacun une partie terminale avant cylindrique (24, 23), assurant l'emboîtement des deux manchons l'un sur l'autre et ayant un axe terminal incliné relativement à l'axe principal du manchon auquel elle appartient.

Application: protection de raccordements angulaires différents, sans sollicitation en tension des manchons.

## Description

La présente invention concerne les protections de terminaison de câbles électriques moyenne tension, de type unipolaire ou tripolaire.

Les protections de terminaison de câbles moyenne tension sont déjà en tant que telles connues. Elles sont utilisées pour assurer individuellement l'isolation électrique et l'étanchéité du raccordement de chaque conducteur de câble à une borne fixe dans un boîtier de terminaison ou à une cosse ou borne extérieure. Elles sont en caoutchouc ou analogue.

Parmi les protections existantes de ce type, on peut citer celles connues sous la marque déposée "Elasticfit" de Cables Pirelli. Cette protection comporte un manchon, ayant une partie intermédiaire à soufflets entre ses deux parties terminales, et un adaptateur monté en bague entretoise entre la borne fixe et l'une des parties terminales correspondantes du manchon. Ce manchon peut recouvrir tout raccordement de la borne et du conducteur, réalisé à angle droit, à angle droit, à 180°, ou avec un angle intermédiaire.

L'adaptateur présente intérieurement des diaphragmes ou ailettes flexibles, assurant son maintien en place sur des bornes de différentes sections possibles et lui donnant une résistance élevée à l'enlèvement du dessus de la borne sur laquelle il est monté. Son diamètre extérieur est par contre rigoureusement adapté au diamètre intérieur de la partie terminale correspondante du manchon.

Pour la mise en place de cette protection, l'adaptateur est tout d'abord enfilé en place définitive sur la borne, tandis que le manchon est enfilé en place provisoire sur l'extrémité du conducteur du câble, avant le raccordement du conducteur à la borne. A ce stade, le manchon est dans une position dite à 180°, avec sa partie intermédiaire non pliée. Le raccordement étant réalisé, le manchon est alors ramené sur le raccord et sur la borne et l'adaptateur.

Lorsque ce raccordement est à angle droit, ou avec une disposition angulaire autre que 180°, les soufflets de la partie intermédiaire permettent au manchon de se couder pour épouser la disposition angulaire du raccordement. Le pliage de la partie intermédiaire doit être obtenu avant que celle-ci ne se trouve au niveau du sommet de l'angle de raccordement, pour permettre d'enfiler le manchon sur la borne et de le faire glisser sur celle-ci et sur l'adapteur. Ce pliage est peu aisé à réaliser lorsque le manchon est encore sur le conducteur et rend diffile la mise en place du manchon. En outre, une fois en place, la partie intermédiaire du manchon reste sous tension. Cette sollicitation permanente est préjudiciable au bon maintien en place du manchon dans le temps, ainsi qu'à une conservation de ses caractéristiques intiales, pour une bonne protection à assurer.

La présente invention a pour but d'éviter de tels inconvénients, en rendant particulièrement aisée la mise en place de la protection et en évitant toute sollicitation sous tension de zones quelconques de sa surface lorsque la protection est en place définitive.

Elle porte sur une protection de terminaison de câble, ayant une forme globale de manchon recouvrant le raccordement d'un conducteur dudit câble à une borne fixe en épousant la disposition angulaire du raccordement du conducteur à ladite borne, constituée par deux manchons assemblés l'un à l'autre, l'un entourant ladite borne et présentant un premier axe principal défini par ladite borne et l'autre entourant le conducteur et présentant un deuxième axe principal défini par ledit conducteur, chacun desdits manchons comportant une face terminale, dite face avant d'assemblage, inclinée en biais sur l'axe principal du manchon concerné, et l'un desdits manchons comportant, en outre, un coude quasi-terminal du côté de sa face avant d'assemblage, caractérisée en ce que la face avant d'assemblage de chacun desdits manchons appartient à une partie terminale avant cylindrique du manchon considéré, définissant un axe terminal incliné sur l'axe principal de ce manchon, et en ce que les parties terminales avant desdits manchons sont emboîtables l'une dans l'autre et équipées de moyens annulaires de rétention desdits manchons emboîtés dans une disposition angulaire variable possible définie par lesdits axes principaux.

Avantageusement cet angle d'inclinaison est de 45°, pour chacune des parties terminales de l'un et l'autre des deux manchons.

Cette protection présente en outre au moins l'une des caractéristiques additionnelles suivantes:
- les moyens de rétention sont constitués par une série de nervures et rainures alternées, sur la surface intérieure, respectivement extérieure, d'emboîtement desdites parties terminales avant, l'une dans l'autre.
- le manchon monté sur ladite borne est dit manchon fixe et comporte ledit coude quasi-terminal, du côté de la partie terminale avant de ce manchon fixe.
- le manchon fixe présente une partie arrière à ondulations annulaires sur lesquelles sont laissés des diaphragmes flexibles saillants intérieurement,
- le manchon monté sur ledit conducteur est dit manchon mobile, est de diamètre supérieur à celui dudit conducteur et présente une partie arrière, opposée à sa partie terminale avant, ayant un diamètre intérieur adapté au diamètre extérieur d'un réducteur monté sur ledit conducteur, ledit réducteur recevant sur lui la partie arrière dudit manchon mobile quand ce manchon mobile est en place finale sur ledit conducteur et est emboîté sur ou dans ledit manchon entourant la borne.

Les caractéristiques et avantages de la présente invention ressortiront de la description donnée ci-après d'un exemple de réalisation illustré dans les dessins ci-annexés. Dans ces dessins :
- La figure 1 est une vue en élévation, partiellement coupée, d'une protection de terminaison de câble, selon l'invention,
- La figure 2 est une vue éclatée, montrant en élévation et demi-coupe la protection précédente, mais non montée en place,
- La figure 3 est une vue schématique de différentes positions angulaires possibles de ladite protection,.
- La figure 4 est une vue schématique de la terminaison dans l'une de ses positions limites, dite à 180°.

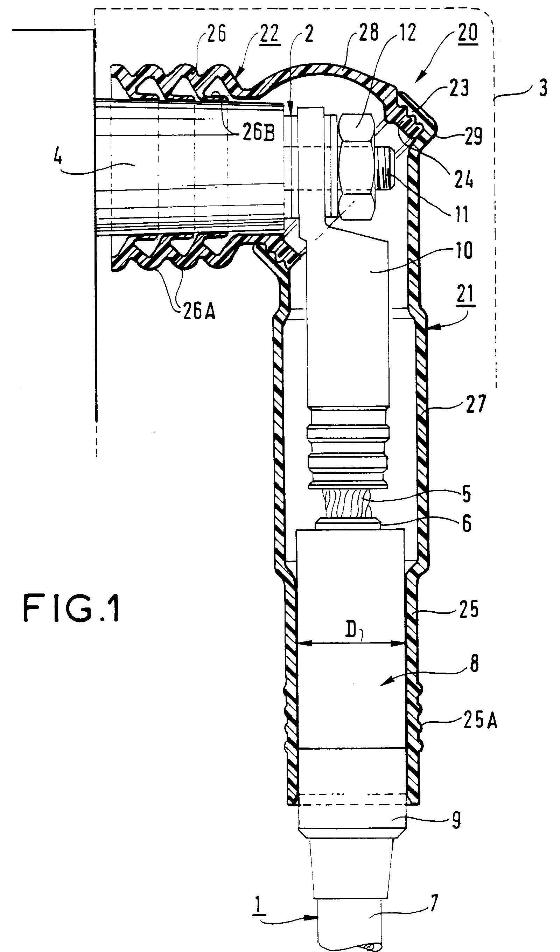

Dans la figure 1, on a montré une terminaison de câble électrique moyenne tension, dont le ou l'un des conducteurs 1 du câble est raccordé à angle droit à une borne fixe 2, dans un boîtier de terminaison 3, ce boîtier n'étant qu'esquissé. Cette borne 2 est portée par l'une des parois dite arrière du boîtier. Elle est montée dans un capuchon 4, avec son extrémité dite avant saillante pour le raccordement du conducteur.

Le conducteur est à âme conductrice 5, recouverte d'un isolant 6, lui-même entouré d'un écran semi-conducteur 7. Un bourrage éventuel et un feuillard d'armure, non représentés, assemblent les éventuels conducteurs du câble et sont revêtus d'une gaine extérieure, également non représentée. L'extrémité du conducteur est dénudée, pour laisser accessibles son âme conductrice, son isolant et son écran semi-conducteur. Un réducteur 8 est monté sur l'isolant 6, avec sa partie terminale, du côté du câble, formant déflecteur intégré désigné sous la référence 9 et venant recouvrir l'extrémité de l'écran dénudé 7. Ce réducteur est en élastomère isolant, qui a été rendu conducteur sur sa seule partie formant déflecteur. Il constitue également un adaptateur de câble, pour différentes sections possibles des conducteurs d'un câble à un autre câble.

Le raccordement du conducteur à la borne est montré réalisé à angle droit par un raccord 10. Ce raccord est serti sur l'extrémité de l'âme qu'il prolonge et est enfilé et bloqué sur l'extrémité avant de la borne par un contact à vis 11 et écrou 12. Ce raccordement pourrait bien entendu être réalisé avec un angle de raccordement quelconque différent et en particulier de 180°, qui dépend des dispositions relatives du câble ou de ses conducteurs et des bornes et qui est réalisé à l'aide du raccord approprié.

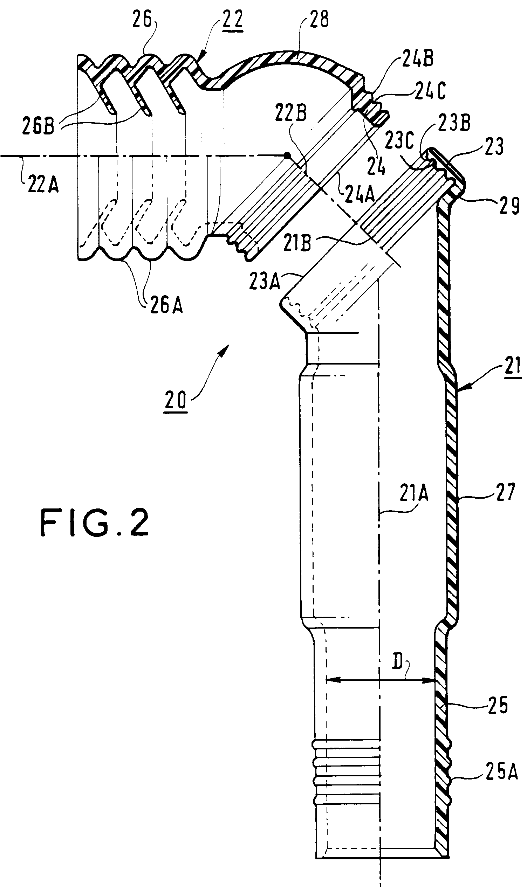

La protection de terminaison de câble, à conducteur 1 raccordé à la borne 2, est désignée globalement sous la référence 20. Elle est constituée par deux manchons distincts, l'un dit manchon mobile 21, qui est monté sur le conducteur 1, et l'autre dit manchon fixe 22, qui est monté directement sur la borne 2. Elle est décrite en détail ci-après en se référant également à la figure 2.

Ces deux manchons 21 et 22 sont de forme générale cylindrique. Chacun est d'axe dit principal 21A, 22A défini par le direction de la borne ou du conducteur sur lequel il est monté. Ils ont chacun une partie terminale dite avant, notée 23, 24 selon le manchon, qui est de longueur relativement courte et définit un axe dit terminal 21B, 22B présentant un changement de direction avec l'axe principal du manchon auquel elle appartient.

Les deux parties terminales avant 23 et 24 sont cylindriques et s'emboîtent l'une dans l'autre. Leur face terminale avant 23A, 24A est circulaire et inclinée en biais relativement à l'axe principal du manchon correspondant. Cet angle d'inclinaison est choisi de 45° dans l'exemple illustré. Les deux angles d'inclinaison de ces faces terminales par rapport aux axes principaux peuvent être différents l'un de l'autre en restant complémentaires. Ils sont tels que les deux axes principaux de ces manchons se coupent à l'intérieur des parties terminales emboîtées.

La partie terminale avant 23 du manchon mobile 21 est montrée retenue emboîtée sur la périphérie de celle 24 du manchon fixe 22.

Pour leur maintien, la partie 23 présente intérieurement et la partie 24, extérieurement, une même série nervures et rainures annulaires alternées 23B, 23C et 24B, 24C.

La partie 23 peut être emboîtée dans la partie 24, pareillement.

Le manchon fixe 22 est monté sur la borne, avant le raccordement du conducteur à la borne. Il s'adapte à une gamme de différentes bornes possibles et est directement reçu sur le capuchon de la borne 2. Il présente à cet effet une partie arrière ondulée 26, à ondulations annulaires 26A et à diaphragmes, ou ailettes, intérieurs flexibles 26B. Ces diaphragmes prolongent sensiblement le bord arrière de chaque ondulation à l'intérieur de la partie arrière 26.

Le diamètre intérieur de cette partie arrière, pris depuis le sommet sur la face intérieure de l'une des ondulations, est légèrement supérieur au diamètre maximal des différentes bornes possibles revêtues de leur capuchon. Le diamètre intérieur, pris sur le bout des diaphragmes, est inférieur au diamètre minimal des bornes revêtues de leur capuchon. Ainsi, les diaphragmes se plient sur le capuchon lors de l'insertion et la mise en place du manchon 22 et s'opposent à son retrait.

La partie intermédiaire du manchon 22 forme un coude 28, semi-arqué d'un côté, de changement de direction de la partie terminale avant. Elle vient autour de l'extrémité avant de la borne 2, qu'elle laisse accessible à travers la face terminale avant 24A, pour le montage et le blocage ultérieurs du raccord 10 sur elle.

Le manchon mobile 21 est enfilé sur le conducteur 1, avant le raccordement de ce dernier à la borne. Il est positionné sur le réducteur 8 et le raccord 10 et emboîté sur le manchon 22, après le raccordement du conducteur à la borne. Ce manchon 21 présente, à l'opposé de sa partie terminale avant 23, une partie arrière 25 adaptée au réducteur 8 qu'elle recouvre en l'enserrant et en venant déborder plus ou moins sur le déflecteur 9. Le diamètre intérieur D de cette partie arrière correspond au diamètre extérieur du réducteur 8 et à celui de la partie attenante du déflecteur 9.

Il a de préférence des stries 25A sur la périphérie de cette partie arrière, facilitant la prise du manchon pour sa mise en place finale.

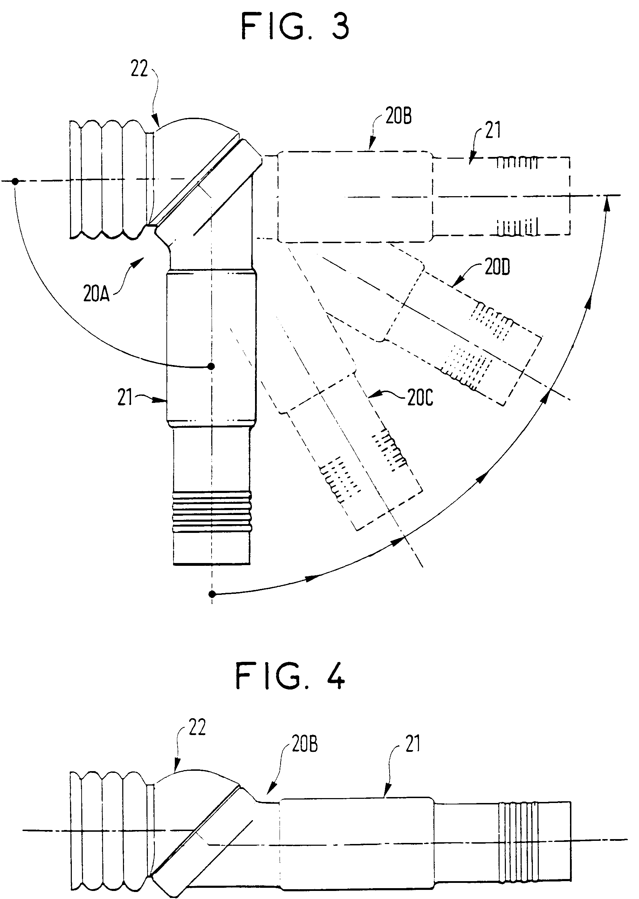

Une partie intermédiaire 27 de ce manchon 21 et la partie terminale avant 23 s'étendent pratiquement jusqu'au bout du raccord 10 fixé à la borne, quand ce manchon 21 est considéré en place finale et emboîté sur le manchon fixe. Du côté de la partie arrière 25, cette partie intermédiaire 27 est de diamètre supérieur à D, sur une part importante de sa longueur. Elle forme à l'opposé de la partie arrière, une transition 29, semi-épaulée, avec la partie terminale avant 23, pour l'inclinaison et le changement éventuel de diamètre de la partie avant 23, de manière que les deux parties terminales avant 23 et 24 se correspondent et s'emboîtent l'une dans l'autre rigoureusement.
Ainsi qu'illustré dans la figure 3 et/ou dans la figure 4, pour l'angle d'inclinaison de 45° de chacune des faces terminales des deux manchons de la protection, cette protection peut prendre deux positions angulaires limites possibles 20A, 20B, l'une à 90° et l'autre à 180°, et toute position angulaire intermédiaire telles que la position 20C ou 20D. Ces positions angulaires et plus particulièrement les deux limites correspondent aux dispositions angulaires habituelles des raccordements des conducteurs de câble aux bornes dans les boîtiers de terminaison. La protection réalisée par les deux manchons précités est ainsi rendue aisée à mettre en place, ceci pour l'une quelconque de ces différentes dispositions angulaires des raccordements et sans aucune sollicitation sous tension de la protection.

## Revendications

**1/** Protection d'une terminaison de câble, protégeant un raccordement d'un conducteur dudit câble à une borne fixe, constituée par deux manchons assemblés l'un à l'autre, l'un entourant ladite borne et présentant un premier axe principal défini par ladite borne et l'autre entourant le conducteur et présentant un deuxième axe principal défini par ledit conducteur, chacun desdits manchons comportant une face terminale, dite face avant d'assemblage, inclinée en biais sur l'axe principal du manchon concerné, et l'un desdits manchons comportant, en outre, un coude quasi-terminal du côté de sa face avant d'assemblage, caractérisée en ce que la face avant d'assemblage (23A, 24A) de chacun desdits manchons (21, 22) appartient à une partie terminale avant cylindrique (23, 24) du manchon considéré, définissant un axe terminal incliné sur l'axe principal de ce manchon, et en ce que les parties terminales avant desdits manchons sont emboîtables l'une dans l'autre et équipées de moyens annulaires (23B, 23C; 24B, 24C) de rétention desdits manchons emboîtés dans une disposition angulaire variable possible définie par lesdits axes principaux.

**2/** Protection selon la revendication 1, caractérisée en ce que lesdits moyens de rétention sont constitués par une série de nervures et rainures alternées, sur la surface intérieure, respectivement extérieure, d'emboîtement desdites parties terminales avant, l'une dans l'autre.

**3/** Protection selon l'une des revendications 1 et 2, caractérisée en ce que le manchon monté sur ladite borne (2) est dit manchon fixe (22) et comporte ledit coude quasi-terminal (28), du côté de la partie terminale avant de ce manchon fixe.

**4/** Protection selon la revendication 3, caractérisée en ce qu'elle comporte en outre une pluralité de diaphragmes (26B) flexibles et saillants intérieurement sur une partie dite arrière (26) dudit manchon fixe (22), opposée à la partie terminale avant et audit coude de ce manchon fixe et ainsi rendue adaptée à la section de ladite borne (2).

**5/** Protection selon la revendication 4, caractérisée en ce que la partie arrière (26) dudit manchon fixe présente une pluralité d'ondulations annulaires (26A) sur sa longueur, lesdits diaphragmes (26B) étant sensiblement dans le prolongement de l'un des bords des ondulations.

**6/** Protection selon l'une des revendications 1 à 5, caractérisée en ce que le manchon monté sur ledit conducteur est dit manchon mobile (21), est de diamètre supérieur à celui dudit conducteur et présente une partie arrière, opposée à sa partie terminale avant, ayant un diamètre intérieur adapté au diamètre extérieur d'un réducteur (8) monté sur ledit conducteur, ledit réducteur recevant sur lui la partie arrière dudit manchon mobile quand ce manchon mobile est en place finale sur ledit conducteur et est emboîté sur ou dans ledit manchon entourant la borne.
